# EUROPÄISCHE PATENTANMELDUNG

(11) **EP 1 339 202 A1**
(43) Veröffentlichungstag der Anmeldung: **27.08.2003**
(21) Anmeldenummer: 02003550.7
(22) Anmeldetag: 15.02.2002
(51) Int. Cl.: H04L 29/08, H04L 29/06

(54) **Verfahren und Server für den Zugriff auf Internet-Seiten**

(71) Anmelder: SIEMENS AKTIENGESELLSCHAFT, 80333 München (DE)
(72) Erfinder: Horn, Michael, 81739 München (DE); Jaschhof, Rainer, 82216 Gernlinden (DE)

(57) **Zusammenfassung**

Es wird ein Verfahren und ein Server für den Zugriff auf Internet-Seiten mit den Internet-Seiten zugeordneten WAP-Adressen mittels eines Mobiltelefons (1) und des WAP beschrieben.

## Beschreibung

Die Erfindung betrifft ein Verfahren sowie einen Server für den Zugriff auf Internet-Seiten gemäß den Oberbegriffen der Patentansprüche 1 und 8.

Es stehen Benutzern von Mobiltelefonen üblicherweise zwei Möglichkeiten zur Verfügung, um auf Internet-Seiten eines Anbieters mittels einer vorbestimmten WAP(Wireless Application Protocol)-Adresse zuzugreifen. Eine Möglichkeit besteht darin, dass der Anbieter eines WAP-Portals seine Internet-Seiten in einem seiner Portalmenüs anbietet. Derartige WAP-Portale sollen in der Regel übersichtlich gestaltet sein, weshalb nur zuvor ausgewählte Internet-Seiten in das Portalmenü mit aufgenommen werden. Demzufolge sind Internet-Seiten von Anbietern, die aufgrund ihrer geringeren Bedeutung nicht in derartige Portalmenüs aufgenommen worden sind, nicht über WAP-Portale zugänglich, so dass deren Universal Resource Locator (URL)-Adresse in die Telefontastatur direkt eingegeben werden muss, um einen Zugang zu ihren Internet-Seiten zu erhalten. Eine derartige Eingabe der URL-Adresse ist aufgrund der Länge der Adresse für die eingebende Person aufwendig und zeitraubend.

Auch die direkte Eingabe der WAP-Adresse in die Tastatur des Mobiltelefons, um eine Verbindung zu den Internetseiten eines Anbieters, der nicht in das Portalmenü mit aufgenommen worden ist, aufzubauen, ist zeitintensiv und arbeitsaufwendig.

Demzufolge liegt der vorliegenden Erfindung die Aufgabe zugrunde, ein Verfahren und einen Server für den Zugriff auf Internet-Seiten zur Verfügung zu stellen, die einen schnellen und einfachen Verbindungsaufbau zu Internet-Seiten eines Anbieters, dessen WAP-Adresse nicht in ein Portalmenü mit aufgenommen ist, ermöglichen.

Diese Aufgabe wird verfahrensseitig durch die Merkmale des Patentanspruchs 1 und vorrichtungsseitig durch die Merkmale des Patentanspruches 8 gelöst.

Ein wesentlicher Punkt der Erfindung liegt darin, dass zunächst eine Telefonieverbindung mittels einer von einem Mobiltelefon ausgesendeten Rufnummer zu einer Funkvermittlungsstelle innerhalb eines Mobilfunknetzes aufgebaut wird, mittels eines in einem intelligenten Netz angeordneten Service Control Points (SCP) die Rufnummer als eine Nummer erkannt wird, welche einer ausgewählten WAP-Adresse zugeordnet ist, die Telefonieverbindung abgebaut wird und anschließend eine auf dem Wireless Application Protocol basierende Verbindung zwischen dem Mobiltelefon und einem WAP-Gateway aufgebaut wird.

Die letztgenannte Verbindung entsteht, nachdem der Service Control Point (SCP) anhand der übermittelten Rufnummer die ausgewählte WAP-Adresse erkannt und über den WAP-Gateway angewählt hat. Sobald eine Verbindung zwischen dem Mobiltelefon und dem WAP-Gateway entstanden ist, wird eine Startseite der Internet-Seiten, auf welche zugegriffen werden soll und welchen die WAP-Adresse zugeordnet ist, an einen WAP-Browser des Mobiltelefons übertragen. Auf diese Weise wird durch Auswahl, Aufruf und Aktivierung einer Telefonnummer, die in dem Mobiltelefon gespeichert sein kann, eine Verbindung zu den Internet-Seiten eines Anbieters aufgebaut, deren WAP-Adresse nicht einem Portalmenü eines WAP-Portals zugeordnet sind. Vielmehr ist der Zugriff auf nahezu jede Internetseite eines Anbieters mit einer WAP-Adresse möglich, sofern zuvor eine Zuordnung dieser WAP-Adresse zu einer speziellen Rufnummer stattgefunden hat.

Vorzugsweise wird die Startseite mittels der Wireless Markup Language (WML) an das Mobiltelefon übertragen, nachdem ein automatischer Verbindungsaufbau zwischen dem Mobiltelefon und dem WAP-Gateway stattgefunden hat.

Gemäß einer bevorzugten Ausführungsform können einer ausgewählten Rufnummer mehrere verschiedene WAP-Adressen und/oder mehrere WAP-Gateways zugeordnet werden, die in Abhängigkeit von der momentanen Tageszeit, dem Ort des Anrufs (also ob er von einer Festnetz-Rufnummer eines stationären WAP-Endgerätes abgeleitet worden oder über einen Location Finder Service eines Mobiltelefones weitergeleitet worden ist) und der momentanen Auslastung der WAP-Gateways und der WAP-Server gemäß einem vorgegebenen Algorithmus ausgewählt und angesteuert werden. Eine Auswahl eines geeigneten WAP-Gateways und der dazu passenden WAP-Adresse anhand der oben genannten Parameter ermöglicht also eine optimierte Auslastung des gesamten Kommunikationsnetzes.

Vorteilhaft wird die Verbindung zwischen dem Mobiltelefon und den WAP-Gateways verbindungsorientiert vergebührt, so dass keine externen weiteren Komponenten, wie WWW-Server, WAP-Gateway oder SCP im intelligenten Netz erforderlich sind. Das Gebührenmodell lässt sich ausschließlich durch die verwendete Rufnummer, auch Trigger-Rufnummer genannt, steuern.

Vorteilhaft weist ein Server zur Durchführung des Verfahrens einen Service Control Point auf, mittels dem eine zuvor aufgebaute Telefonverbindung zwischen dem Mobiltelefon und der Funkvermittlungsstelle abgebaut, und eine weitere Verbindung zwischen dem Mobiltelefon und dem WAP-Gateway aufgebaut wird, um auf Internet-Seiten eines Anbieters mit einer WAP-Adresse, die einer von dem Mobiltelefon gesendeten Rufnummer zugeordnet ist, zuzugreifen.

Durch den anfänglichen Aufbau einer Telefonieverbindung wird mit einer Sprachverbindung eine automatisch durch das intelligente Netz vermittelte Modemverbindung zwischen dem Mobiltelefon und dem WAP-Gateway aufgebaut, ohne dass der Anwender zweimal Eingaben vornehmen muss, nämlich die Eingabe einer Rufnummer und die Eingabe einer WAP-Adresse bzw. einer Universal Resource Locator(URL)-Adresse.

Weitere vorteilhafte Ausführungsformen ergeben sich aus den Unteransprüchen.

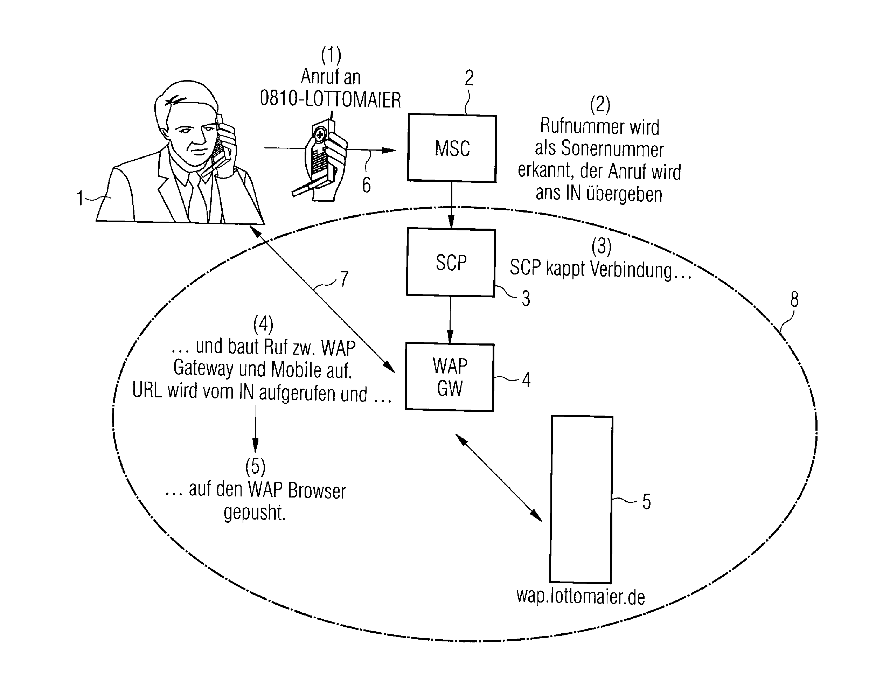

Vorteile und Zweckmäßigkeiten ergeben sich ebenso aus der nachfolgenden Beschreibung in Verbindung mit der Zeichnung. Hierbei zeigt die Figur eine schematische Darstellung des Verfahrensablaufs mit Vorrichtungsaspekten gemäß einer Ausführungsform der Erfindung.

Der Benutzer eines Mobiltelefons 1 ruft in einem ersten Schritt über eine Trigger-Rufnummer 0810-5688662437 von seinem Mobiltelefon aus eine Funkvermittlungsstelle 2 an, die in der Figur mit MSC (Mobile Switching Center) bezeichnet wird. Die Rufnummer 0810-5688662437 steht für die Trigger-Rufnummer 0810-LOTTOMAIER, welche einen Zugriff auf die Internetseite des Anbieters Lottomaier ermöglichen soll.

Diese Rufnummer wird anhand ihrer inneren Struktur als Sonder-Rufnummer mittels einer Erkennungseinrichtung erkannt und führt dazu, dass der Anruf an einen Service Control Point (SCP) 3, der innerhalb eines intelligenten Netzes angeordnet ist, weitergeleitet wird. Der Service Control Point 3 unterbricht die Sprachverbindung zu dem Mobiltelefon 1 und baut automatisch eine weitere Verbindung zwischen einem WAP-Gateway 4 und dem Mobiltelefon 1 mittels eines zwischengeschalteten Modems auf, um auf die Internet-Seiten 5 des Anbieters mit der WAP-Adresse "wap.lottomaier.de" zugreifen zu können.

Nachdem die Sprachverbindung 6 zwischen dem Mobiltelefon 1 und der Funkvermittlungsstelle 2 abgebaut worden ist, wird mittels der Verbindung 7 eine Startseite "wap.lottomaier.de" über den WAP-Gateway 4 an einen WAP-Browser im Mobiltelefon 1 übertragen.

Sowohl der Service Control Point 3 als auch der WAP-Gateway und die Internet-Seiten sind innerhalb des intelligenten Netzes 8 angeordnet.

Das Mobiltelefon kann durch jedes Endgerät eines anderen Typs, wie beispielsweise ein Festnetztelefon oder ein PC, ersetzt werden.

An dieser Stelle sei darauf hingewiesen, dass alle oben beschriebenen Teile für sich allein gesehen und in jeder Kombination, insbesondere die in der Zeichnung dargestellten Details als erfindungswesentlich beansprucht werden. Abänderungen hiervon sind dem Fachmann geläufig.

## Patentansprüche

1. Verfahren für den Zugriff auf Internet-Seiten mit WAP-Adressen mittels eines Mobiltelefons (1) und des Wireless-Application-Protocol,
**gekennzeichnet durch**
folgende Schritte:
- Aufbau einer Telefonieverbindung (6) von dem Mobiltelefon (1) zu einer in einem Mobilfunknetz angeordneten Funkvermittlungsstelle (2) mittels einer eingegebenen Rufnummer,
- Erkennung der Rufnummer als eine einer ausgewählten WAP-Adresse zugeordneten Rufnummer mittels eines in einem intelligenten Netz (8) angeordneten Service Control Points (3),
- Abbau der Telefonieverbindung (6) mittels des Service Control Points (3),
- selbsttätiger Aufbau einer auf dem WAP-Protokoll basierenden Modem-Verbindung (7) zwischen dem Mobiltelefon (1) und einem innerhalb des intelligenten Netzes (8) angeordneten WAP-Gateways (4),
- Aufruf der Internet-Seiten (5) mit der ausgewählten WAP-Adresse mittels des WAP-Gateways (4) und
- Übertragung einer Startseite der Internet-Seiten (5) mit der ausgewählten WAP-Adresse an einen WAP-Browser des Mobiltelefons (1).

2. Verfahren nach Anspruch 1,
**dadurch gekennzeichnet, dass**
der Rufnummer eine Universal Resource Locator-Adresse einer Internet-Seite (5) zugeordnet ist.

3. Verfahren nach Anspruch 1 oder 2,
**dadurch gekennzeichnet, dass**
die Startseite mittels der Wireless Markup Language an das Mobiltelefon (1) übertragen wird.

4. Verfahren nach einem der vorangegangenen Ansprüche,
**dadurch gekennzeichnet,dass**
die Rufnummer in einer Speichereinrichtung des Mobiltelefons (1) aufgelistet wird.

5. Verfahren nach einem der vorangegangenen Ansprüche,
**dadurch gekennzeichnet,dass**
einer ausgewählten Rufnummer mehrere verschiedene WAP-Adressen und/oder WAP-Gateways zugeordnet werden.

6. Verfahren nach Anspruch 5,
**dadurch gekennzeichnet,dass**
eine der WAP-Adressen und eines der WAP-Gateways in Abhängigkeit von dem Zeitpunkt, dem Mobiltelefontyp und/oder der Auslastung des WAP-Gateways ausgewählt wird.

7. Verfahren nach einem der vorangegangenen Ansprüche,
**dadurch gekennzeichnet,dass**
die Verbindung zwischen Mobiltelefon (1) und dem WAP-Gateway (4) verbindungsorientiert vergebührt wird.

8. Server zur Durchführung des Verfahrens nach einem der vorangegangenen Ansprüche, wobei der Server in einem intelligenten Netz (8) angeordnet ist,
**gekennzeichnet durch**
einen Service Control Point (3), mittels dem eine zuvor aufgebaute Telefonieverbindung zwischen einem Mobiltelefon (1) und einer in einem Mobilfunknetz angeordneten Funkvermittlungsstelle (2) abgebaut wird, und eine weitere Verbindung (7) zwischen dem Mobiltelefon (1) und einem WAP-Gateway (4) aufgebaut wird, um auf Internet-Seiten mit einer WAP-Adresse, die einer von dem Mobiltelefon gesendeten Rufnummer zugeordnet ist, zuzugreifen.

9. Server nach Anspruch 8,
**gekennzeichnet durch**
eine Erkennungseinrichtung zum Zuordnen der von dem Mobiltelefon gesendeten Rufnummer zu einer ausgewählten WAP-Adresse.
